Europäisches Patentamt

European Patent Office    (11) Numéro de publication: **0 252 831**

Office européen des brevets    **A1**

(12)    **DEMANDE DE BREVET EUROPEEN**

(21) Numéro de dépôt: **87401577.9**    (51) Int. Cl.⁴: **H 05 B 3/14**
    **H 05 B 3/42, C 04 B 35/10**

(22) Date de dépôt: **06.07.87**

(30) Priorité: **08.07.86 FR 8610239**

(43) Date de publication de la demande:
    **13.01.88 Bulletin 88/02**

(84) Etats contractants désignés: **DE GB IT**

(71) Demandeur: **COMMISSARIAT A L'ENERGIE ATOMIQUE**
    **31/33, rue de la Fédération**
    **F-75015 Paris (FR)**

(72) Inventeur: **Curtila, Robert**
    **624, Route de Narbonne**
    **F-38950 Saint Martin le Vinoux (FR)**

    **Tollens, Daniel**
    **129, Hameau du Château**
    **F-38360 Sassenage (FR)**

(74) Mandataire: **Mongrédien, André et al**
    **c/o BREVATOME 25, rue de Ponthieu**
    **F-75008 Paris (FR)**

(54) **Elément chauffant à trés haute température.**

㊐ Elément chauffant à très haute température par effet Joule caractérisé en ce qu'il est constitué d'un barreau cylindrique (1) en alumine β dans lequel est ménagé au moins un logement (15) contenant au moins un sel de sodium.

FIG. 1

EP 0 252 831 A1

**Description**

ELEMENT CHAUFFANT A TRES HAUTE TEMPERATURE

La présente invention concerne un élément chauffant à très haute température. Les traitements thermiques à température voisine de 2 000°C sont de plus en plus utilisés. Les fours et leurs éléments chauffants sont à base de matériaux ou céramiques qui, à l'aide d'un préchauffage, deviennent conducteurs de l'électricité, constituant donc après cet amorçage la partie résistive indispensable au chauffage par effet Joule. De tels éléments chauffants sont, par exemple, décrits dans la demande de brevet FR-A-75 11335 déposée au nom du Commissariat à l'Energie Atomique le 11 Avril 1975.

Les températures de préchauffage nécessaires à l'amorçage de ce phénomène sont de l'ordre de 1 200°C. l'alumine $\beta$ (11 $AL_2$ $O_3$ , $Na_2$ O) permet une température d'amorçage bien plus faible voisine de 200°C. Cette alumine $\beta$ comporte ainsi des ions $Na^+$ plus mobiles dont la présence contribue à l'abaissement de la température d'amorçage et confère à l'alumine des propriétés électriques intéressantes. En effet, une température d'amorçage voisine de 200°C peut être facilement atteinte par des moyens classiques de chauffage par exemple par courant d'air chaud ou à l'aide d'un résistor disposé à l'intérieur de l'élément chauffant en céramique. Mais un élément chauffant en alumine $\beta$ perd des ions $Na^+$ avec le temps et l'augmentation de la température. De ce fait, ses propriétés électriques se dégradent, la puissance électrique et la température de fonctionnement diminuent de manière incompatible avec un usage normal.

La présente invention a pour objet un moyen pour maintenir constantes les propriétés électriques de l'alumine $\beta$ . Plus précisément, l'invention a pour objet un élément chauffant caractérisé en ce qu'il est constitué d'un corps cylindrique allongé en alumine $\beta$ dans lequel est ménagé au moins un logement contenant au moins un sel de sodium. De préférence le cylindre présente une section droite circulaire ; les sels de sodium utilisables peuvent être choisis dans le groupe des aluminates, phosphates, borates, carbonates. De préférence, on choisit le carbonate de sodium ($CO_3$ $Na_2$ ). Grâce à ce moyen, les propriétés de l'alumine $\beta$ sont conservées dans la totalité de la masse et le matériau est alors parfaitement adapté au chauffage à des températures voisines de 2 000°C.

Selon une première variante, l'élément chauffant est fabriqué dans un barreau en alumine $\beta$ comportant en ses extrémités deux trous borgnes longitudinaux.

Selon une deuxième variante, l'élément chauffant est fabriqué à l'aide d'un tube an alumine $\beta$.

Selon une troisième variante, l'élément chauffant est fabriqué à l'aide d'un tube en alumine $\beta$ comportant au moins un bouchon d'un ciment en alumine $\beta$ placé à l'intérieur du tube.

Selon un mode de réalisation préférentiel, les amenées de courant électrique aux extrémités de l'élément chauffant sont constituées par deux ouvertures longitudinales dans lesquelles sont placés des ressorts conducteurs solidaires de parties rigides ; les ensembles ressort - partie rigide étant fixés dans les ouvertures par un ciment d'alumine $\beta$ . Cette structure protège de la corrosion la partie chaude de l'électrode et permet d'éviter la rupture par dilatation différentielle de l'élément chauffant et des arrivées de courant.

De toute façon, l'invention sera mieux comprise à la lecture de la description qui suit, donnée à titre non limitatif. Cette description se réfère aux deux figures annexées sur lesquelles on a représenté :
- sur la figure 1, un élément chauffant réalisé à l'aide d'un barreau en alumine $\beta$ ,
- sur la figure 2 un élément chauffant réalisé à l'aide d'un tube en alumine $\beta$.

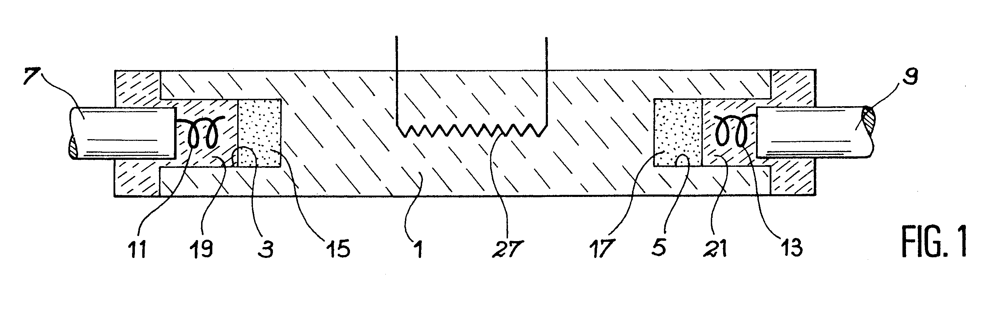

Sur la figure 1, on voit un barreau 1 cylindrique en alumine $\beta$ comportant deux trous borgnes 3,5 carottés en ses extrémités dans son axe longitudinal à l'aide de forets diamantés ainsi que deux amenées de courant 7, 9 munies de deux ressorts métalliques 11, 13.

Les deux ressorts métalliques 11, 13, solidaires de la partie rigide des amenées de courant 7, 9 évitent la rupture de l'élément chauffant à température voisine de 2 000°C par dilatation différentielle. Après remplissage partiel d'au moins un trou borgne 3 et/ou 5 par un sel de sodium (de préférence du carbonate de sodium) pour constituer une réserve 15 et/ou 17, les ensembles formés par les ressorts 11, 13 et les amenées de courant 7, 9 sont maintenus par des scellements 19, 21 en alumine $\beta$ dans les trous borgnes 3, 5 de telle sorte que les ressorts 11, 13 ne soient pas en contact avec le sel de sodium.

Sur la figure 2, l'élément chauffant est constitué d'un tube 1' en alumine $\beta$ dont le diamètre interne permet de recevoir à chacune de ses extrémités un ensemble ressort - partie rigide de l'amenée de courant 7', 9', 11' et 13'. Un premier bouchon 23 est formé avec un ciment d'alumine $\beta$ dans le tube 1'. Une quantité de sel de sodium 15' (de préférence du carbonate de sodium) est alors introduite dans le tube au contact du bouchon 23. Un deuxième bouchon 25 en alumine $\beta$ est réalisé pour délimiter le volume de la réserve de sel de sodium 15'.

Plusieurs autres bouchons et remplissages de sel de sodium successifs peuvent encore être réalisés si nécessaire. Les ensembles formés par les ressorts 11', 13' et les amenées de courant 7', 9' sont ensuite placés et maintenus dans le tube 1' à l'aide des scellements 19' et 21' à base de ciment en alumine $\beta$ .

Lorsque l'élément chauffant est formé d'un tube 1' en alumine $\beta$ , une quantité de sel de sodium 15' (de préférence du carbonate de sodium) est disposée dans le tube 1' dont les extrémités sont obturées par les ensembles ressorts 11', 13' et amenées de courant 7', 9' scellés à l'aide d'un ciment en alumine $\beta$ . Le scellement doit empêcher un contact entre les extrémités libres des ressorts 11', 13' avec le sel de sodium.

L'élément chauffant selon l'invention présente une température d'amorçage voisine de 200°C. Cette température peut être atteinte à l'aide d'un courant d'air chaud. On peut aussi prévoir la présence d'un résistor comme représenté en 27 sur la figure 1. Le résistor 27 est placé et scellé dans le barreau 1 préalablement et convenablement usiné à cet effet. Bien évidemment le tube 1' pourrait lui aussi comporter un tel résistor.

L'élément chauffant réalisé selon l'invention permet d'obtenir des températures de 2 000°C. A titre d'exemple, on a réalisé un élément chauffant présentant les caractéristiques suivantes :
. longueur : 200 millimètres
. tension d'alimentation : 220 volts
. intensité : 25 ampères
. température de l'élément chauffant : 1700°C.

La durée de vie de cet élément chauffant dépasse 20 000 heures.

**Revendications**

1. Elément chauffant à très haute température par effet Joule caractérisé en ce qu'il est constitué d'un barreau cylindrique (1) en alumine $\beta$ dans lequel est ménagé au moins un logement (15) contenant au moins un sel de sodium.

2. Elément chauffant selon la revendication 1, caractérisé en ce que le sel de sodium est du carbonate de sodium.

3. Elément chauffant selon l'une quelconque des revendications 1 ou 2, caractérisé en ce qu'il est fabriqué à l'aide d'un barreau (1) en alumine $\beta$ comportant en ses extrémités deux trous borgnes longitudinaux (3, 5) recevant les amenées de courant.

4. Elément chauffant selon l'une quelconque des revendications 1 ou 2, caractérisé en ce qu'il est fabriqué à l'aide d'un tube (1') en alumine $\beta$.

5. Elément chauffant selon la revendication 4, caractérisé en ce qu'il comporte au moins un bouchon (23, 25) d'un ciment en alumine $\beta$ placé à l'intérieur du tube (1') de part et d'autre d'une masse 15' d'un sel de sodium.

6. Elément chauffant selon l'une quelconque des revendications 1 à 5, caractérisé en ce que les amenées de courant électrique aux extrémités dudit élément chauffant sont constituées par deux ouvertures longitudinales (3, 5) dans lesquelles sont placés des ressorts conducteurs (11, 13) solidaires de parties rigides (7, 9), les ensembles ressort - partie rigide étant fixés dans les ouvertures par un bouchon de ciment (19, 21) en alumine $\beta$.

FIG. 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 107 511  (HITACHI) <br> * Page 2, lignes 14-27 * <br><br> --- | 1,3 | H 05 B    3/14 <br> H 05 B    3/42 <br> C 04 B   35/10E |
| A | US-A-4 016 446  (CADOFF) <br> * Colonne 3, lignes 9-16 * <br><br> --- | 1,3 | |
| A | FR-A-2 299 289  (FORD FRANCE et al.) <br> * Page 6,  ligne  25  -  page  7, ligne 17 * <br><br> --- | 1,2,4, 6 | |
| A | GB-A-1 451 952  (U.K. ATOMIC ENERGY AUTHORITY) <br><br> --- | | |
| A | EP-A-0 010 834   (FORD FRANCE) <br><br> --- | | DOMAINES TECHNIQUES RECHERCHES (Int. Cl.4) |
| A | US-A-3 749 882   (PILKINGTON) <br><br> --- | | H 05 B    3/00 <br> C 04 B   35/00 |
| A | FR-A-1 207 440  (A.K. KANTHAL) <br><br> ----- | | |

Le présent rapport de recherche a été établi pour toutes les revendications

| Lieu de la recherche | Date d'achèvement de la recherche | Examinateur |
|---|---|---|
| LA HAYE | 02-10-1987 | RAUSCH R.G. |